# EUROPÄISCHE PATENTSCHRIFT

(11) **EP 2 953 221 B1**
(45) Veröffentlichungstag und Bekanntmachung des Hinweises auf die Patenterteilung: **19.08.2020**
(21) Anmeldenummer: 15166735.9
(22) Anmeldetag: 07.05.2015
(51) Int. Cl.: H02G 3/18, H02G 3/08, H02G 3/14

(54) **GERÄTEBECHER FÜR ELEKTRISCHE INSTALLATIONSGERÄTE**
DEVICE HOLDER FOR ELECTRIC INSTALLATION DEVICES
PANIER DE SUPPORT D'APPAREILLAGES POUR APPAREILS D'INSTALLATION ÉLECTRIQUES

(30) Priorität: 06.06.2014 DE 102014210948
(43) Veröffentlichungstag der Anmeldung: 09.12.2015
(73) Patentinhaber: OBO Bettermann GmbH & Co. KG, 58710 Menden (DE)
(72) Erfinder: Beckmeyer, Karl-Heinz, 58566 Kierspe (DE); Raschke, Jörg, 51674 Wiehl (DE); Stiens, Ingolf, 59494 Soest (DE)
(74) Vertreter: Patentanwälte Ruff, Wilhelm, Beier, Dauster & Partner mbB

(56) Entgegenhaltungen:
- EP-A1- 0 991 158
- DE-A1-102008 015 770
- DE-U1-202006 010 817
- DE-U1-202011 102 159

## Beschreibung

Die Erfindung betrifft einen Gerätebecher für elektrische Installationsgeräte.

Aus der deutschen Patentschrift DE 198 45 335 B4 ist ein Gerätebecher für elektrische Installationsgeräte bekannt, der eine trogartige Form mit einem Boden und einer rahmenförmig umlaufenden Wandung aufweist. In der rahmenförmigen Wandung sind nutartige und an die Abmessungen von Rasthaken von Abdeckplatten angepasste Ausnehmungen angeordnet. Abdeckplatten können auf die Oberseite der rahmenförmigen Wandung aufgerastet werden, indem die an den Abdeckplatten angeordneten Rasthaken Rastnasen an der Oberkante der Ausnehmungen hintergreifen. Die Abdeckplatten können Durchgangsöffnungen aufweisen, um elektrische Installationsgeräte zu befestigen.

Aus der deutschen Gebrauchsmusterschrift DE 20 2011 102 159 U1 ist ein weiterer Gerätebecher zur Aufnahme von Elektroinstallationsgeräten bekannt. Der Gerätebecher besteht aus einem Boden und einer rahmenförmig umlaufenden Wandung. Auf den Gerätebecher wird ein Einbaurahmen aufgerastet, an dem dann elektrische Installationsgeräte befestigt werden können.

Aus der Gebrauchsmusterschrift DE 20 2006 010 817 U1 ist ein Gerätebecher für elektrische Installationsgeräte bekannt. Der Gerätebecher weist eine umlaufende Wandung und einen mit der Wandung einstückig verbundenen Boden auf. Aus dem Boden können Abschnitte herausgebrochen werden. Hierzu ist der Boden mit Sollbruchstellen versehen. Die umlaufende Wandung ist an ihren Stirnseiten mit Vorsprüngen zum Einhängen des Gerätebechers in Montageöffnungen einer Rastleiter einer Unterflurkassette versehen. Die Oberseite des Gerätebechers ist offen und kann mit Abdeckplatten versehen werden.

Aus der europäischen Offenlegungsschrift EP 0 991 158 A1 ist ein Gerätebecher mit einer umlaufenden Wandung und einem einstückig mit der Wandung verbundenen Boden bekannt. An den Stirnseiten der umlaufenden Wandung sind Vorsprünge zum Einhängen des Gerätebechers in Montageöffnungen einer Rastleiter einer Unterflurkassette vorgesehen. Eine Oberseite des Gerätebechers kann mit Abdeckplatten verschlossen werden.

Aus der deutschen Offenlegungsschrift DE 10 2008 015 770 A1 ist ein Zusatzrahmen für eine Unterflurkassette bekannt. Der Zusatzrahmen kann an eine Unterseite eines Rahmens einer Unterflurkassette angesetzt werden und ist mit Rastleiteröffnungen versehen, die zum Einhängen von Gerätebechern dienen.

Mit der Erfindung soll ein Gerätebecher für elektrische oder datentechnische Installationsgeräte verbessert werden.

Erfindungsgemäß ist hierzu ein Gerätebecher für elektrische oder datentechnische Installationsgeräte mit den Merkmalen von Anspruch 1 vorgesehen. Es ist ein Gerätebecher vorgesehen, der einen Rahmen mit einer umlaufenden Wandung mit jeweils wenigstens einem Vorsprung an gegenüberliegenden Enden des Rahmens zum Einhängen des Gerätebechers in Montageöffnungen einer Unterflurkassette aufweist und bei dem wenigstens eine Abdeckplatte zum Aufsetzen auf einen ersten Rand der umlaufenden Wandung vorgesehen ist, wobei die Abdeckplatte wenigstens teilweise mit Befestigungseinrichtungen für Installationsgeräte versehen ist und wobei wenigstens eine Bodenplatte zum Aufsetzen auf einen zweiten, dem ersten Rand gegenüberliegenden Rand der umlaufenden Wandung vorgesehen ist.

Indem anstelle eines trogartigen Grundkörpers ein Rahmen mit einer umlaufenden Wandung vorgesehen ist, an dessen Unterseite Bodenplatten und an dessen Oberseite Abdeckplatten befestigt werden können, ist es möglich, auch für unterschiedlichste Einbausituationen und Installationsgeräte mit einer vergleichsweise geringen Anzahl an einzelnen Bauteilen auszukommen. Überraschenderweise können die Bodenplatten, der Rahmen und die Abdeckplatten so ausgebildet werden, dass eine ausreichende Stabilität des zusammengebauten Gerätebechers gegeben ist. Beim Einbau von elektrischen Installationsgeräten ist es beispielsweise erforderlich, dass der Gerätebecher einen im Wesentlichen geschlossenen Boden aufweist, um zu verhindern, dass die spannungsführenden Anschlüsse der elektrischen Installationsgeräte zugänglich sind. Bei datentechnischen Installationsgeräten sind hingegen in der Regel nur sehr große Biegeradien der zugeführten Datenleitungen erlaubt, so dass für datentechnische Installationsgeräte die Leitungen bisher durch Öffnungen im Boden des Gerätebechers hindurchgeführt werden mussten. Solche Öffnungen wurden in den Boden hineingebrochen. Alternativ wurde speziell für datentechnische Installationsgeräte mit nach unten hin offenen Befestigungsrahmen gearbeitet. Mit der Erfindung ist es nun möglich, ein und denselben Rahmen mit unterschiedlichen Abdeckplatten und Bodenplatten zu kombinieren und dadurch sowohl für elektrische als auch datentechnische Installationsgeräte jeweils optimale Einbaubedingungen bereitzustellen.

Eine gegenüber einem Innenraum des Gerätebechers außenliegende Seite der umlaufenden Wandung ist mit nutartigen Ausnehmungen versehen, die sich vom ersten Rand zum zweiten Rand erstrecken, im Bereich des ersten und des zweiten Rands jeweils mit nach außen gerichteten Rastnasen versehen sind und zum Aufnehmen von federnden Rasthaken der Abdeckplatten bzw. der Bodenplatten dienen.

Mittels solcher nutartiger Ausnehmungen sowie nach außen gerichteter Rastnasen in den nutartigen Ausnehmungen im Bereich des ersten und zweiten Rands können sowohl Bodenplatten als auch Abdeckplatten sicher befestigt werden. Die Bodenplatten und die Abdeckplatten sind dabei vorteilhafterweise mit Rastnasen versehen, die so in die nutartigen Ausnehmungen eingreifen, dass die Seitenkanten der Rasthaken an den Seitenwänden der nutartigen Ausnehmungen anliegen. Dadurch erhält der Rahmen durch das Aufsetzen der Bodenplatten oder Abdeckplatten eine sehr große Stabilität, die überraschenderweise ausreichend ist, um auch den auf elektrische und datentechnische Installationsgeräte während des Betriebs einwirkenden erheblichen Bedienkräften standzuhalten. Beispielsweise muss in eine Schutzkontaktsteckdose mit Kindersicherung ein Schutzkontaktstecker mit erheblicher Kraft eingesteckt werden, um überhaupt einen Einsteckvorgang zu ermöglichen. Umgekehrt können auch beim Herausziehen der Stecker aus Datensteckdosen oder Energiesteckdosen erhebliche Kräfte auftreten. Die nutartigen Ausnehmungen verlaufen vorteilhafterweise senkrecht zu einer Längsrichtung des Rahmens, wobei die Längsrichtung durch die beiden Vorsprünge an gegenüberliegenden Enden des Rahmens zum Einhängen des Gerätebechers in Montageöffnungen einer Unterflurkassette definiert ist. Auf diese Weise können die Abdeckplatten und/oder die Bodenplatten wahlweise auf eine Oberseite oder Unterseite des Rahmens aufgesetzt werden und können dort jeweils in die durchgehenden nutartigen Ausnehmungen eingreifen.

In Weiterbildung der Erfindung sind die Abdeckplatten mit Durchgangsöffnungen zum Befestigen von Installationsgeräten versehen.

Mittels solcher Durchgangsöffnungen, die insbesondere auch mit Rasteinrichtungen versehen sind, können Installationsgeräte zuverlässig, werkzeuglos und schnell befestigt werden.

In Weiterbildung der Erfindung weist die Bodenplatte wenigstens eine Sollbruchstelle auf, wobei die Sollbruchstelle eine Teilung der Bodenplatte in einer Richtung vom ersten zum zweiten Rand ermöglicht.

Durch Vorsehen wenigstens einer Sollbruchstelle können die Bodenplatten bei Bedarf verkleinert werden. Beispielsweise dann, wenn in einem Teilbereich des Gerätebechers ein datentechnisches Installationsgerät angeordnet werden soll, kann in diesem Bereich die Bodenplatte abgebrochen werden, um das Zuführen von Datenleitungen im großen Radius zu ermöglichen. Dies deshalb, da die Unterseite des Gerätebechers dann offen ist.

In Weiterbildung der Erfindung ist die Sollbruchstelle als Perforation ausgebildet.

In Weiterbildung der Erfindung sind die Bodenplatte und die umlaufende Wandung so ausgebildet, dass die Bodenplatte sowohl auf den ersten Rand als auch den zweiten Rand der umlaufenden Wandung aufgesetzt werden kann.

Auf diese Weise ist es möglich, die Bodenplatten auch zum Abdecken einer Oberseite des Rahmens zu verwenden, beispielsweise wenn in einem Gerätebecher lediglich wenige Installationsgeräte angeordnet werden sollen. Mittels der Bodenplatten kann dann auch die Oberseite des Rahmens benachbart zu den Installationsgeräten verschlossen werden und es wird keine speziell ausgebildete Abdeckplatte benötigt.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, in den Zeichnungen dargestellten und der Beschreibung beschriebenen Ausführungsformen lassen sich dabei in beliebiger Weise miteinander kombinieren, ohne den Rahmen der Erfindung zu überschreiten. In den Zeichnungen zeigen:
- Fig. 1: einen erfindungsgemäßen Gerätebecher gemäß einer ersten Ausführungsform mit elektrischen und datentechnischen Installationsgeräten,
- Fig. 2: den Gerätebecher der Fig. 1 in auseinandergezogener Darstellung,
- Fig. 3: einen erfindungsgemäßen Gerätebecher gemäß einer weiteren Ausführungsform und
- Fig. 4: den Gerätebecher der Fig. 3 in auseinandergezogener Darstellung.

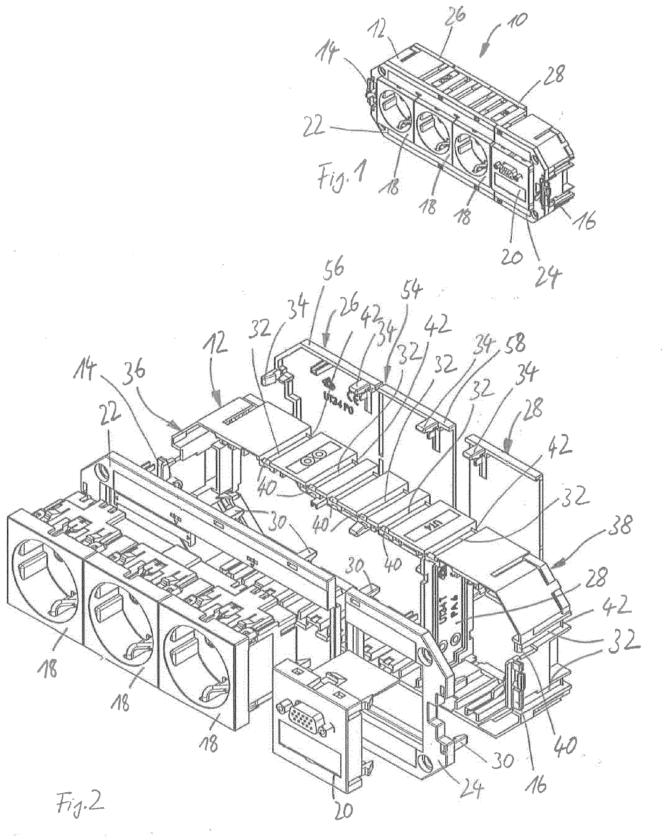

In Fig. 1 ist in einer Ansicht von schräg oben ein erfindungsgemäßer Gerätebecher 10 dargestellt, der einen Rahmen 12 mit umlaufender Wandung aufweist. An dem Rahmen ist an gegenüberliegenden Enden jeweils ein Vorsprung 14 bzw. 16 angeordnet, der zum Einhängen des Gerätebechers in Rastleitern einer nicht dargestellten Unterflurkassette dient. In den Gerätebecher sind drei Schutzkontaktsteckdosen 18 eingesetzt sowie eine Datendose 20. Die Schutzkontaktsteckdosen 18 sind wiederum an einer Abdeckplatte 22 befestigt, die auf den Rahmen 12 aufgesetzt ist. Auch die Datendose 20 ist an einer Abdeckplatte 24 befestigt, die ebenfalls auf den Rahmen 12 aufgesetzt ist.

Auf einer, den Abdeckplatten 22, 24 gegenüberliegenden Seite des Rahmens 12 sind Bodenplatten 26, 28 aufgesetzt, die die Unterseite des Rahmens 12 teilweise verschließen. Unterhalb der Datendose 20 ist der Rahmen 12 offen, um die zu der Datendose 20 führenden Datenleitungen in möglichst großem Radius in den Gerätebecher 10 einführen zu können.

Die Darstellung der Fig. 2 zeigt den Gerätebecher 10 der Fig. 1 in auseinandergezogener Darstellung.

In Fig. 2 ist zu erkennen, dass die Schutzkontaktsteckdosen 18, die elektrische Installationsgeräte bilden, mittels Rasthaken in eine Öffnung der Abdeckplatte 22 eingesetzt sind. Auch die Datendose 20 ist mit Rasthaken versehen und mittels dieser Rasthaken in eine Durchgangsöffnung der Abdeckplatte 24 eingesetzt und an dieser verrastet.

Der Innenraum des Rahmens 12 wird mittels einer Trennwand 28 in zwei Bereiche unterteilt, nämlich zum einen den Bereich, in dem Energieleitungen den Schutzkontaktsteckdosen 18 zugeführt werden und zum anderen den Bereich, in dem Datenleitungen der Datendose 20 zugeführt werden.

Die Abdeckplatten 22, 24 sind jeweils mit federnden Rasthaken 30 versehen, die mit nach innen, zum Innenraum des Rahmens 12 hin weisenden Rasthaken versehen sind. Diese Rasthaken 30 greifen beim Aufsetzen der Abdeckplatten 22, 24 in nutartige Ausnehmungen 32 in der umlaufenden Wandung des Rahmens 12 ein. Eine Breite der Rasthaken 30 ist dabei so bemessen, dass diese nur geringfügig kleiner ist als eine Breite der nutartigen Ausnehmungen 32. Die Seitenkanten der Rasthaken 30 liegen dadurch wenigstens abschnittsweise an den Seitenwänden der nutartigen Ausnehmungen 32 an und stabilisieren im verrasteten Zustand dadurch den Rahmen 12 erheblich.

Auch die Bodenplatten 26, 28 sind mit federnden Rasthaken 34 versehen, die gleich zu den Rasthaken 30 an den Abdeckplatten 22, 24 ausgebildet sind. Auch diese Rasthaken 34 greifen in die nutartigen Ausnehmungen 32 ein und stabilisieren dadurch im verrasteten Zustand den Rahmen 12. Die Rasthaken 34 sind im gleichen Abstand zueinander angeordnet wie die Rasthaken 30 der Abdeckplatten 22, 24. Auch die Bodenplatten 26, 28 können somit an der in Fig. 2 vorne liegenden Seite des Rahmens 12 aufgerastet werden.

Im Bereich eines in Fig. 2 vorne liegenden ersten Randes 36 des Rahmens 12 sowie auch im Bereich des gegenüberliegenden zweiten Randes 38 des Rahmens 12 sind die nutartigen Ausnehmungen 32 jeweils mit außen, also vom Innenraum des Rahmens 12 wegweisenden Rastnasen 40, 42 versehen. Die Rastnasen 40 werden nach dem Aufsetzen der Abdeckplatten 22, 24 von den federnden Rasthaken 30 hintergriffen. Die Rastnasen 42 werden nach dem Aufsetzen der Bodenplatten 26, 28 von den federnden Rasthaken 34 hintergriffen. Sowohl die Abdeckplatten 22, 24 als auch die Bodenplatten 26, 28 sind dadurch sicher an dem Rahmen 12 verrastet. Da die nutartigen Ausnehmungen 32 senkrecht zu einer Längsrichtung des Rahmens 12 verlaufen, wobei sich diese Längsrichtung zwischen den beiden Vorsprüngen 14, 16 an den gegenüberliegenden Enden des Rahmens 12 erstreckt, können die Bodenplatten 26, 28 auch auf den ersten Rand 36 des Rahmens 12 aufgesetzt werden. Die Rasthaken 34 der Bodenplatten 26, 28 würden dann die Rastnasen 40 im Bereich des ersten Rands 36 der nutartigen Ausnehmungen 32 hintergreifen. In gleicher Weise könnten, falls dies als erforderlich angesehen wird, die Abdeckplatten 22, 24 auf den zweiten Rand 38 des Rahmens 12 aufgesetzt werden.

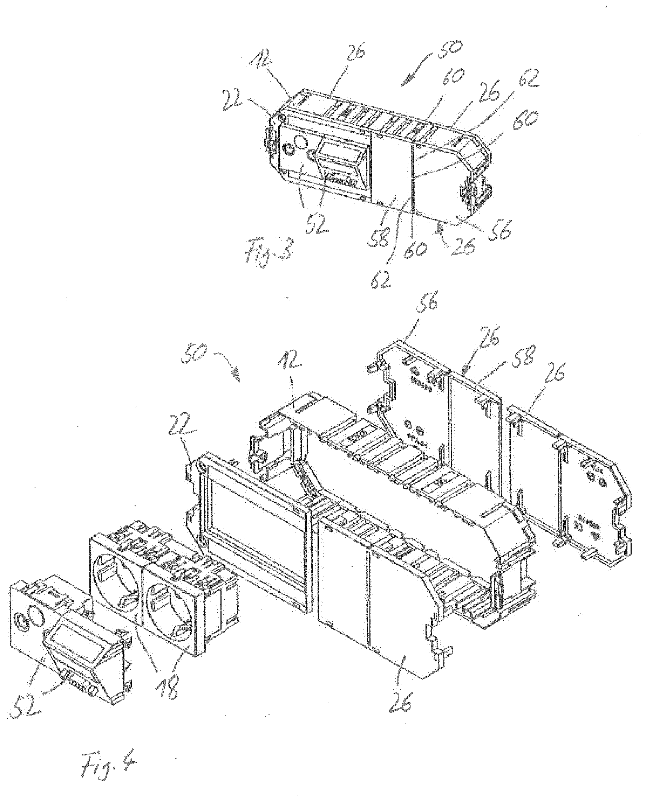

Anhand der Fig. 2 ist noch zu erkennen, dass die Bodenplatte 26 eine Perforation 54 aufweist, die mittels dreier, einen ersten Abschnitt 56 und einen zweiten Abschnitt 58 der Bodenplatte 26 verbindender Stege und dazwischenliegender Durchgangsöffnungen ausbildet ist. Gut zu erkennen sind die beiden Abschnitte 58 und 56 der Bodenplatte 26 in Fig. 3. Wie ausgeführt, sind die beiden Abschnitte 56, 58 lediglich durch drei Stege 60 miteinander verbunden, wobei zwei der Stege im Bereich der Seitenkanten der Bodenplatte 26 liegen, der dritte Steg liegt mittig in der Bodenplatte 26. Zwischen jeweils zwei Stegen 60 liegen schlitzartige Durchgangsöffnungen 62. Der Abschnitt 56 kann nun in einfacher Weise vom Abschnitt 58 getrennt werden, indem die Bodenplatte 26 abgeknickt wird. Dadurch brechen die Stege 60 durch. Wahlweise kann dann entweder nur der Abschnitt 58, der dann die Bodenplatte 28 in Fig. 2 bildet, oder nur der Abschnitt 56 auf den Rahmen 12 aufgesetzt werden.

Auch auf diese Weise kann die Anzahl der Einzelteile für den erfindungsgemäßen Gerätebecher verringert werden.

Die Darstellung der Fig. 3 zeigt einen erfindungsgemäßen Gerätebecher 50 gemäß einer weiteren Ausführungsform der Erfindung.

Der Gerätebecher 50 weist einen Rahmen 12 auf, der identisch zu dem Rahmen 12 des Gerätebechers 10 der Fig. 1 und 2 ausgebildet ist und daher nicht erneut erläutert wird. Im Unterschied zu dem Gerätebecher 10 der Fig. 1 und 2 ist der Rahmen 12 des Gerätebechers 50 mit einer Abdeckplatte 22 und insgesamt drei Bodenplatten 26 versehen. Die Abdeckplatte 22 dient zur Aufnahme zweier datentechnischer Installationsgeräte 52. Alternativ können, wie in Fig. 4 dargestellt ist, anstelle der datentechnischen Installationsgeräte 52 auch zwei Schutzkontaktsteckdosen 18 in die Abdeckplatte 22 eingesetzt werden.

Die vollständige Unterseite des Rahmens 12 ist mittels zweier identischer Abdeckplatten 26 verschlossen. Auch der in Fig. 3 und 4 rechte Teil der Oberseite des Rahmens 12 ist mit einer Abdeckplatte 26 verschlossen. Eine Zugänglichkeit der spannungsführenden Anschlüsse der Schutzkontaktsteckdosen 18 oder auch einer Rückseite der datentechnischen Installationsgeräte 32 ist dadurch zuverlässig verhindert. Dabei ist aber festzustellen, dass auch für die Abdeckung der Oberseite des Rahmens 12 dieselben Bodenplatten 26 verwendet werden können, die auch für das Verschließen der Unterseite des Rahmens 12 vorgesehen sind. Durch die Erfindung wird dadurch ein äußerst flexibel einzusetzender Gerätebecher geschaffen, der aber mittels nur weniger unterschiedlicher Einzelteile auskommt. Speziell wird nur eine Art Bodenplatte, nämlich die Bodenplatte 26, benötigt, die dann, falls erforderlich, an der Sollbruchstelle 54 geteilt wird, siehe Fig. 2.

## Patentansprüche

1. Gerätebecher für elektrische oder datentechnische Installationsgeräte aufweisend einen Rahmen (12) mit einer umlaufenden Wandung und mit jeweils wenigstens einem Vorsprung (14, 16) an gegenüberliegenden Stirnseiten des Rahmens (12) zum Einhängen des Gerätebechers (10, 50) in Montageöffnungen einer Unterflurkassette, wobei wenigstens eine separate Abdeckplatte (22, 24) zum Aufsetzen auf einen ersten Rand (36) der umlaufenden Wandung vorgesehen ist, wobei die Abdeckplatte (22, 24) wenigstens teilweise mit Befestigungseinrichtungen für Installationsgeräte versehen ist, **dadurch gekennzeichnet, dass** eine Oberseite und eine Unterseite des Rahmens (12) offen sind und dass wenigstens eine separate Bodenplatte (26, 28) zum Aufsetzen auf einen zweiten, dem ersten Rand (36) gegenüberliegenden Rand (38) der umlaufenden Wandung vorgesehen ist, wobei eine gegenüber einem Innenraum des Gerätebechers (10, 50) außenliegende Seite der umlaufenden Wandung mit nutartigen Ausnehmungen (32) versehen ist, die sich vom ersten Rand (36) zum zweiten Rand (38) erstrecken, im Bereich des ersten und des zweiten Randes (36, 38) jeweils mit nach außen gerichteten Rastnasen (40, 42) versehen sind und zum wenigstens abschnittsweisen Aufnehmen von federnden Rasthaken (30, 34) der Abdeckplatten (22, 24) beziehungsweise der Bodenplatten (26, 28) dienen, wobei die Rastnasen (40) im Bereich des ersten Randes (36) dazu ausgebildet sind, nach dem Aufsetzen der Abdeckplatten (22, 24) von den federnden Rasthaken (30) der Abdeckplatten (22, 24) hintergriffen zu sein und wobei die Rastnasen (42) im Bereich des zweiten Randes (38) dazu ausgebildet sind, nach dem Aufsetzen der Bodenplatten (26, 28) von den federnden Rasthaken (34) der Bodenplatten (26, 28) hintergriffen zu sein.

2. Gerätebecher nach Anspruch 1, **dadurch gekennzeichnet, dass** die Abdeckplatten (22, 24) mit Durchgangsöffnungen zum Befestigen von Installationsgeräten versehen ist.

3. Gerätebecher nach wenigstens einem der vorstehenden Ansprüche, **dadurch gekennzeichnet, dass** die Bodenplatte (26) wenigstens eine Sollbruchstelle (54) aufweist, wobei die Sollbruchstelle (54) eine Teilung der Bodenplatte (26) ermöglicht.

4. Gerätebecher nach Anspruch 3, **dadurch gekennzeichnet, dass** die Sollbruchstelle (54) als Perforation ausgebildet ist.

## Claims

1. Device holder cup for electrical or data technological installation devices, comprising a frame (12) with a circumferential wall and in each case with at least one projection (14, 16) on opposite end faces of the frame (12) for mounting the device holder cup (10, 50) in mounting openings of an underfloor cassette, wherein at least one separate cover plate (22, 24) to be placed onto a first rim (36) of the circumferential wall is provided, wherein the cover plate (22, 24) is provided at least partially with fastening devices for installation devices, **characterized in that** an upper side and an underside of the frame (12) are open, and **in that** at least one separate bottom plate (26, 28) to be placed onto a second rim (38) of the circumferential wall, opposite to the first rim (36), is provided, wherein a side of the circumferential wall, which is an exterior side in relation to an interior space of the device holder cup (10, 50), is provided with groove-type recesses (32) extending from the first rim (36) to the second rim (38), each provided with outward oriented latching lugs (40, 42) in the region of the first and the second rims (36, 38) and used for at least sectional receiving of resilient latching hooks (30, 34) of the cover plates (22, 24) and the bottom plates (26, 28), respectively, wherein the latching lugs (40) in the region of the first rim (36) are configured to be engaged behind by the resilient latching hooks (30) of the cover plates (22, 24) after placing-on of the cover plates (22, 24), and wherein the latching lugs (42) in the region of the second rim (38) are configured to be engaged behind by the resilient latching hooks (34) of the bottom plates (26, 28) after placing-on of the bottom plates (26, 28).

2. Device holder cup according to claim 1, **characterized in that** the cover plates (22, 24) are provided with through openings for fixing of installation devices.

3. Device holder cup according to at least one of the preceding claims, **characterized in that** the bottom plate (26) includes at least one predetermined breaking point (54), wherein the predetermined breaking point (54) allows splitting of the bottom plate (26).

4. Device holder cup according to claim 3, **characterized in that** the predetermined breaking point (54) is in the form of a perforation.

## Revendications

1. Panier de support d'appareillage pour appareils d'installation électriques ou de technologie des données, présentant un cadre (12) avec une paroi périphérique et avec à chaque fois au moins une saillie (14, 16) au niveau de côtés frontaux opposés du cadre (12) pour accrocher le panier de support d'appareillage (10, 50) dans des ouvertures de montage d'une cassette en sous-sol, au moins une plaque de recouvrement séparée (22, 24) étant prévue pour être placée sur un premier bord (36) de la paroi périphérique, la plaque de recouvrement (22, 24) étant pourvue au moins en partie de dispositifs de fixation pour des appareils d'installation, **caractérisé en ce qu'**un côté supérieur et un côté inférieur du cadre (12) sont ouverts et **en ce qu'**au moins une plaque de fond séparée (26, 28) est prévue pour être placée sur un deuxième bord (38) de la paroi périphérique, opposé au premier bord (36), un côté de la paroi périphérique situé à l'extérieur par rapport à un espace intérieur du panier de support d'appareillage (10, 50) étant pourvu d'évidements en forme de rainure (32) qui s'étendent depuis le premier bord (36) jusqu'au deuxième bord (38), sont pourvus dans la région du premier et du deuxième bord (36, 38) à chaque fois d'ergots d'encliquetage (40, 42) dirigés vers l'extérieur et servent à recevoir au moins en partie des crochets d'encliquetage élastiques (30, 34) des plaques de recouvrement (22, 24) ou des plaques de fond (26, 28), les ergots d'encliquetage (40) étant réalisés dans la région du premier bord (36) de manière à être mis en prise par l'arrière après le positionnement des plaques de recouvrement (22, 24) par les crochets d'encliquetage élastiques (30) des plaques de recouvrement (22, 24) et les ergots d'encliquetage (42), dans la région du deuxième bord (38), étant réalisés de manière à être mis en prise par l'arrière après le positionnement des plaques de fond (26, 28) par les crochets d'encliquetage élastiques (34) des plaques de fond (26, 28).

2. Panier de support d'appareillage selon la revendication 1, **caractérisé en ce que** les plaques de recouvrement (22, 24) sont pourvues d'ouvertures de passage pour la fixation d'appareils d'installation.

3. Panier de support d'appareillage selon au moins l'une quelconque des revendications précédentes, **caractérisé en ce que** la plaque de fond (26) présente au moins une zone destinée à la rupture (54), la zone destinée à la rupture (54) permettant une séparation de la plaque de fond (26).

4. Panier le support d'appareillage selon la revendication 3, **caractérisé en ce que** la zone destinée à la rupture (54) est réalisée sous forme de perforation.
